Europäisches Patentamt

European Patent Office

Office européen des brevets

(19)

(11) **EP 1 505 572 B1**

(12) **EUROPEAN PATENT SPECIFICATION**

(45) Date of publication and mention
of the grant of the patent:
**08.03.2006 Bulletin 2006/10**

(51) Int Cl.:
***G10L 15/02*** (2006.01)   ***G10L 15/04*** (2006.01)
***G10L 15/06*** (2006.01)

(21) Application number: **02730304.9**

(22) Date of filing: **06.05.2002**

(86) International application number:
**PCT/ES2002/000210**

(87) International publication number:
**WO 2003/094151 (13.11.2003 Gazette 2003/46)**

(54) **VOICE RECOGNITION METHOD**

SPRACHERKENNUNGSVERFAHREN

PROCEDE DE RECONNAISSANCE VOCALE

(84) Designated Contracting States:
**AT BE CH CY DE DK ES FI FR GB GR IE IT LI LU
MC NL PT SE TR**

(43) Date of publication of application:
**09.02.2005 Bulletin 2005/06**

(73) Proprietor: **PROUS INSTITUTE FOR BIOMEDICAL
RESEARCH S.A.
08028 Barcelona (ES)**

(72) Inventors:
• **PROUS BLANCAFORT, Josep
E-08021 Barcelona (ES)**

• **SALILLAS TELLAECHE, Jesús
E-08190 Sant Cugat Del Vallès (ES)**

(74) Representative: **Curell Aguilà, Marcelino et al
Dr. Ing. M. Curell Sunol I.I. S.L.
Agentes de la Propiedad Industrial
Passeig de Gracia, 65 bis
08008 Barcelona (ES)**

(56) References cited:
**EP-A2- 0 788 090**     **US-A- 5 621 809**
**US-A- 5 734 791**     **US-A- 6 131 089**

**Description**

Field of the invention

This invention concerns the sector of automatic voice recognition for extensive and continuous vocabularies and in a manner which is independent of the speaker.

The invention refers to a voice recognition procedure which comprises:

(a) a step of decomposing a digitised voice signal into a plurality of fractions,
(b) a step of representation of each of the fractions by a representative vector $X_t$, and
(c) a step of classification of the representative vectors $X_t$, in which each representative vector $X_t$ is associated with a phonetic representation, which allows a sequence of phonetic representations to be obtained.

The invention further refers to an information technology system which comprises an execution environment suitable for executing an information technology programme which comprises voice recognition means.

The invention also refers to an information technology programme which can be directly loaded in the internal memory of a computer and an information technology programme stored in a medium suitable for being used by a computer.

State of the art

In general, automatic voice recognition systems function in the following manner: in an initial step, the analog signal which corresponds to the acoustic pressure is captured with a microphone and is introduced into an analog / digital converter that will sample the signal with a given sampling frequency. The sampling frequency used is usually double the maximum frequency in the signal, which is approximately from 8 to 10 kHz for voice signals and 4 kHz for voice signals carried by telephone. Once digitised, the signal is divided into fractions of from 10 to 30 milliseconds duration, generally with some overlap between one fraction and the next.

A representative vector is calculated from each fraction, generally by means of a transform to the spectral plane using Fast Fourier Transform (FFT) or some other transform and subsequently taking a given number of coefficients of the transform. In most cases first and second order derivatives of the transformed signal are also used to better represent the variation over time of the signal. Currently, the use of cepstral coefficients is fairly widespread, which are obtained from a spectral representation of the signal subsequently subdivided into its Mel or Bark forms and adding delta and delta-delta coefficients. The details of such implementations are known and can be found for example in (1).

Once the representative vectors have been obtained, there follows a classification or decodification process with respect to such to obtain a recognition of some subunit present in the voice signal: words, syllables or phonemes. This process is based on the modelling of the acoustic signal through techniques such as Hidden Markov Models (HMM), described in (2), Dynamic Time Warping (DTW), described in (3) or Hidden Dynamic Models (HDM), a recent example of which is (4). In all such systems a large amount of test data is used to train and calculate the optimal parameters of the model which will then be used to classify or decode the representative vectors of the voice signal which one wishes to recognise.

A further example of a known automatic voice recognition system is dislosed in EP-A-0788090.

Currently, the most widespread systems are those that use Markov Models. In continual speech frequent coarticulatory phenomena are produced, which cause the modification of the pronunciation characteristics of the phonemes, and even the disappearance of many of them in a continual sequence. This, combined with the variability proper to the voice signal characteristics of every individual speaker means that the rate of direct recognition of vocal subunits in a continual voice signal and with unlimited vocabulary is relatively low. Most systems use phonemes as the principal vocal subunit, grouping them in n groups (called n-grams) to be able to apply statistical information relative to the probabilities that a phoneme follows another in a given language, such as is described in (5). As shown in (5), the application of n-grams continues to be insufficient to obtain acceptable recognition rates, which is the reason for all advanced systems using language models which incorporate dictionaries with a high number of precoded words (typically between 60,000 and 90,000) and with information on the occurrence probabilities with respect to individual words and ordered combinations of words. Examples of such systems are (6) and (7). The application of these techniques significantly improves the recognition rate for individual words, although with the drawback of increased system complexity and a limitation of the system's generic use in situations where a significant number of words not found in the dictionary can occur.

Summary of the invention

The objective of the present invention as claimed in the appended claims is to overcome the above drawbacks. This aim is achieved by a voice recognition procedure such as indicted at the beginning of this specification, characterised in that said classification step comprises at least a multistep binary tree residual vectorial quantisation.

Another feature of the invention is an information technology system which comprises an execution environment suitable for executing an information technology programme which comprises voice recognition means through at least a multistep binary tree residual vectorial quantisation according to the invention.

A further feature of the invention is an information technology programme which can be directly loaded in the internal memory of a computer which comprises instructions suitable for performing a procedure according to the invention.

Finally, another feature of the invention is an information technology programme stored in a medium suitable for being used by a computer which comprises instructions suitable for performing a procedure according to the invention.

Preferably the classification step comprises at least two successive vectorial quantisations, and more preferably the classification step comprises a first vectorial quantisation suitable for classifying each of the representative vectors $X_1$ in a group of among 256 possible groups, and a second vectorial quantisation suitable for classifying each of the representative vectors $X_t$ classified within each of the 256 groups in a subgroup of among at least 4096 possible subgroups, and advantageously 16,777,216 possible subgroups, for each of the groups. A particularly advantageous embodiment of the invention is obtained when at least one of the vectorial quantisations is a multistep binary tree with symmetrical reflection residual vectorial quantisation.

Preferably the phonetic representation is a subphonic element, although in general the phonetic representation can be any known voice signal subunit (syllables, phonemes or subphonic elements).

Advantageously the digitised voice signal is decomposed into a plurality of fractions which are partially overlapped.

Another advantageous embodiment of the procedure according to the invention is obtained when subsequent to the classification step there is a segmentation step which allows the phonetic representations to be joined to form groups with a greater phonetic length. I.e., what is done is to take the sequence of subphonic elements which is being obtained, segment it into small fragments, and then the subphonic elements of the fragments obtained are grouped into phonemes within the same segment or fragment. Preferably the segmentation step comprises a group search of at least two subphonic elements which each comprise at least one auxiliary phoneme, and a grouping of the subphonic elements which are comprised between each pair of the groups which form segments of subphonic elements.

It is particularly advantageous that the segmentation step comprise a step grouping subphonic elements into phonemes, in which the grouping step is performed with respect to each of the segments of subphonic elements and comprises the following substeps:

1. Starting from the sequence of segments of subphonic elements:

$$\left\{\varphi'_{j,m}\right\} \qquad 1 \le t \le L$$

in which $L$ is the segment length.

2. In...

3. In $\left[ \begin{array}{ll} \left\{j \in \varphi^i_{j,m}\right\} = \left\{j \in \varphi^{i+1}_{j,m}\right\}; & n_j = n_j + 1 \\ \\ \left\{m \in \varphi^i_{i,m}\right\} = \left\{m \in \varphi^{i+1}_{i,m}\right\}; & n_m = n_m + 1 \end{array} \right.$

4. If

5. If $\left\{j \in \varphi^i_{j,n}\right\} \ne \left\{j \in \varphi^{i+1}_{j,m}\right\}$ and $\left\{m \in \varphi^i_{j,n}\right\} \ne \left\{m \in \varphi^{i+1}_{j,m}\right\}$ the following grouping is performed:

$$\int = \text{index max } \{n_j, \, n_m \, 1 \le j \le 60; \, 1 \le m \le 60\}$$

$$\left\{\varphi'_{j,m}\right\}; s \le t \le e \Rightarrow \varphi_f$$

$i = i + 1$; If $i < L$-1 return to substep 3, otherwise finalise the segmentation.

6. $i = i + 1$; If $i < L$-1 return to substep 4, otherwise go to substep 5 and finalise the segmentation.

Basically, what is taking place in this case is to take the segments obtained and perform a grouping of the chains of subphonic elements into phonemes.

Preferably the procedure comprises a learning step in which at least one known digitised voice signal is decomposed into a phoneme sequence and each phoneme into a sequence of subphonic elements, and subsequently a subphonic element is assigned to each representative vector $X_t$ according to the following rules:

1. $\varphi_{k-1}$, $\varphi_k$, $\varphi_{k+1}$, ... being the phoneme sequence, in which the phoneme $\varphi_k$ is produced in the time segment $\left[ t_i^k, t_f^k \right]$, in correspondence with the sequence of representative vectors $\{X_t\}$.

2. The representative vectors $\{X_t\}$ are assigned to subphonic units according to the rule:

$$\begin{cases} X_t \rightarrow / \varphi_{k-1} \_ \varphi_k / & ; t_i^k < t \leq t_i^k + 0,2(t_f^k - t_i^k) \\ X_t \rightarrow / \varphi_k \_ \varphi_k / & ; t_i^k + 0,2(t_f^k - t_i^k) < t \leq t_i^k + 0,8(t_f^k - t_i^k) \\ X_t \rightarrow / \varphi_k \_ \varphi_{k+1} / & ; t_i^k + 0,8(t_f^k - t_i^k) < t \leq t_f^k \end{cases}$$

Generally the decomposition into phonemes of the digitised voice signal used in teaming is performed manually, and the decomposition into subphonic elements can be performed automatically with the previous rules, starting from the manual decomposition into phonemes.

Advantageously the procedure comprises a step of reduction of the residual vectorial quantisation tree which comprises the following substeps:

1. An initial value is given to $p$ = number of steps.
2. The branches of the residual vectorial quantisations, which are situated in step $p$ are taken, i.e., the vectors $C_{j^p}$ such that longitude $(j^p)=p$
3. If the vector $C_{j^{p-1}\_0}$ and the vector $C_{j^{p-1}\_1}$ are both associated to the same subphonic element $\varphi_{j,m}$, step $p$ is discarded and the subphonic element $\varphi_{j,m}$ is associated with the vector $C_{j^{p-1}}$.
4. If $p > 2$, $p = p$-1 is taken and substep 2 is repeated.

This step of reduction of the residual vectorial quantisation tree is performed advantageously after the learning step.

Preferably the representative vector is of 39 dimensions, which are 12 normalised Mel-cepstral coefficients, the energy in logarithmic scale, and its first and second order derivatives.

Brief description of the drawings

Other advantages and characteristics of the invention will become better apparent from the following description, which illustrates, in an entirely non limitative capacity, some preferable modes of embodiment of the invention, with reference to the appended drawings, in which:

Figure 1, is a block diagram of a procedure according to the invention, and
Figure 2, is a diagram of a step of recognition of phonetic representations.

Detailed description of some embodiments of the invention

This invention describes a method of automatic voice recognition for unlimited and continuos vocabularies and in a manner which is independent of the speaker. The method is based in the application of multistep vectorial quantisation techniques to carry out the segmentation and classification of the phonemes in a highly precise manner.

Specifically, the average energy of each fraction together with an ensemble of Mel-cepstral coefficients and the first and second derivatives of both the average energy and the cepstral vector are used to form a representative vector of each fraction in 39 dimensions. These vectors are passed through a first quantisation step formed by an 8 step binary tree vectorial quantiser which performs a first classification of the fraction, and which is designed and trained with classical vectorial quantisation techniques. The function of this first quantiser is simply to segment the fractions into 256 segments. For each of these segments a 24 step binary tree with symmetrical reflection vectorial quantiser is designed separately.

So then, each vector will have been segmented into a binary string composed of 32 digits: 8 from the first segmentation, and 24 from the subsequent step. These binary strings are associated with phonetic representations during the vectorial quantiser training step.

As from this point, the decoding of each vector is carried out performing this process and taking the phonetic representation associated to the resulting binary string. The words are recognised by performing string-matching between the sequences of phonetic representations resulting from a new phonetic distance formula.

All vectors from the dictionaries can be stored in 75 Mb of memory, and each decoding requires the calculation of a maximum of 32 vectorial distortions. Having the dictionaries in memory, the entire process can be performed in real time with a PC of moderate power.

Phoneme individual recognition rates obtained are higher than 90%, allowing high precision word recognition without needing a prior word dictionary, and with a far more simplified calculation complexity.

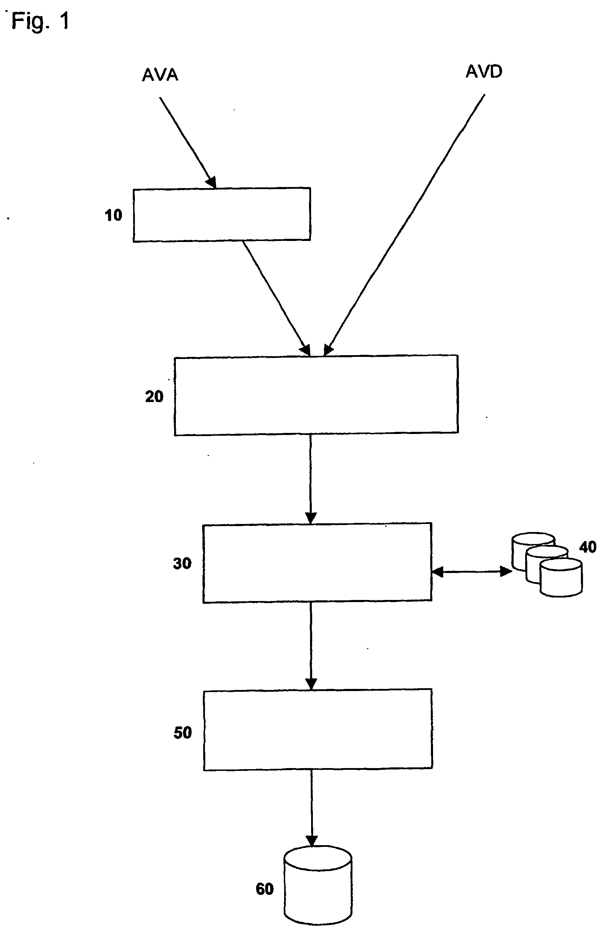

The procedure according to the invention is illustrated in Figure 1. The original voice signal which, in general, can be audio or video, can be analog (AVA) or digital (AVD). If the voice signal is not originally in digital format, it must first pass through a sampling and quantisation step (10). Once in digital format, the signal passes through an acoustic pre-processing block (20) to obtain a series of representative vectors which describe the most important characteristics to be able to effect phonetic recognition. These vectors are subsequently processed in the phonetic recognition step (30), where they are compared with the libraries of subphonic elements (40) to obtain the sequence of elements which most closely approximates the sequence of entrance vectors. Finally, the sequence of subphonic elements thus obtained is segmented (50) and reduced to a simpler phonetic representation, and saved in a database (60) so that retrieval can be carried out efficiently when performing a search. The above steps are described in greater detail below.

Step 10 corresponds to a conventional analog/digital converter. The voice signal coming from a microphone, video tape or any other analog means is sampled at a frequency of 11 kHz and with a resolution of 16 bits. The sampling can be performed at any other frequency (for example, 16 kHz) without any restriction in scope. In fact, the choice of optimum sampling frequency will depend on the system application: for applications in which the original sound comes from recording studios or is a high quality recording a sampling frequency of 16 kHz is preferable since it will allow the representation of a greater range of frequencies from the original voice signal. On the other hand, if the original sound comes from bad quality recordings (conferences, recordings with a PC microphone, multimedia files coded to low resolution for transmission by Internet, ...) it would be better to use a lower sampling frequency, 11 kHz, which would reduce part of the background noise or which can be closer to the frequency of the original signal (the case of files coded for transmission by internet, for example). Naturally, if a given sampling frequency is chosen the entire system must be trained with this frequency.

Step 20 corresponds to the acoustic pre-processing. The aim of this step is to transform the sequence of original samples of the signal into a sequence of representative vectors which represent characteristics of the signal, which allow better modelling of the phonetic phenomena and which are not so correlated with respect to one another. The representative vectors are obtained as follows:

1. The sequence of original signal samples is structured into fractions corresponding to 30 msec. of signal. The fractions are taken each 10 msec., which is to say that they overlap. To eliminate part of the undesirable effects produced by the fraction overlap, these are weighted with a Hamming window.

2. A pre-emphasis filter is applied to the fractions with the following transference function: $H(z) = 1-0{,}97z^{-1}$

3. For each fraction, a vector of 12 Mel-cepstral coefficients is calculated:

$$x_t(k) \quad 1 \le k \le 12$$

In which $t$ corresponds to the fraction number, which is to say, it is taken every 10 msec.

4. The Mel-cepstral coefficient vector is normalised with respect to the fraction average present in the phrase. Since the exact duration of the phrase is not known, and neither are the beginning and end points, an average duration of 5.5 sec. is taken, and thus normalisation is:

$$\mu_t(k) = \frac{1}{550} \sum_{t-550}^{t} x_t(k) \qquad 1 \le k \le 12$$

$$\overline{x}_t(k) = x_t(k) - \mu_t(k) \qquad 1 \le k \le 12$$

5. The first and second order derivatives of the normalised vector are also taken:

$$\Delta \bar{x}_t(k) = \bar{x}_{t+2}(k) - \bar{x}_{t-2}(k) \qquad 1 \le k \le 12$$

$$\Delta\Delta \bar{x}_t(k) = \Delta \bar{x}_{t+1}(k) - \Delta \bar{x}_{t-1}(k) \qquad 1 \le k \le 12$$

6. Finally, the energy in logarithmic scale of each fraction is normalised with respect to its maximum value and the first and second order derivatives are taken:

$$\bar{x}_t(0) = x_t(0) - \max_t \{x_t(0)\}$$

$$\Delta \bar{x}_t(0) = \bar{x}_{t+2}(0) - \bar{x}_{t-2}(0)$$

$$\Delta\Delta \bar{x}_t(0) = \Delta \bar{x}_{t+1}(0) - \Delta \bar{x}_{t-1}(0)$$

Thus, the representative vector $X_t$ has 39 dimensions and is formed by:

$$\{\bar{x}_t(k)\}, \{\Delta \bar{x}_t(k)\}, \{\Delta\Delta \bar{x}_t(k)\}, \bar{x}_t(0), \Delta \bar{x}_t(0), \Delta\Delta \bar{x}_t(0) \qquad 1 \le k \le 12$$

Details as to the calculations necessary for the acoustic pre-processing step can be found in (8), (1).

Recognition of phonetic representations is performed in step 30. The objective of this step is to associate the entrance representative vector $X_1$ with a subphonic element. Each individual person speaks at a different speed, and in addition the speed (measured in phonemes per second) of each individual also varies depending on his state of mind or level of anxiety. In general, the speed of speech varies between 10 and 24 phonemes per second. Since the representative vectors $X_1$ are calculated every 10 ms, there are 100 vectors per second, and thus each individual phoneme is represented by between 4 and 10 representative vectors. This means that each representative vector $X_1$ represents a subphonic acoustic unit, since its duration will be less than that of an individual phoneme.

Each language can be described with an ensemble of phonemes of limited size. The English language, for example, can be described with about 50 individual phonemes. An additional 10 fictitious phonemes are added to represent different types of sound present in the signal:

| Phoneme | Represents | Phoneme | Represents |
|---------|------------|---------|------------|
| /UH/ | *Interjections such as uh, ah, em, er, ...* | /EXHALE/ | *Exhalation* |
| /bSIL/ | *Beginning of a silence* | /CLICK/ | *Sound produced by the tongue* |
| /eSIL/ | *End of a silence* | /SMACK/ | *Click produced by the tongue* |
| /SIL/ | *Middle of a silence* | /SWALLOW/ | *Swallow saliva* |
| /INHALE/ | *Inhalation* | /NOISE/ | *Any other type of unclassified noise* |

which forms a total of 60 phonetic units. Any other number of phonemes can be used without any restriction in scope.

During continuous speech frequent coarticulatory phenomena are also produced, in which the pronunciation of each phoneme is effected by the phonemes which immediately precede or follow it, since the human articulatory system cannot change position immediately between the pronunciation of one phoneme and the next. This effect is modelled by taking binary combinations of the sixty original phonemes, to form a classificatory ensemble comprising the 3600 possible combinations, although many of them never arise in practice. Taking of binary combinations is enough, since the model works on the subphonic level.

By way of example, an individual pronunciation of the English word bat could be represented in the system on exiting step 30 by a sequence such as:

..., /eSIL_B/, /B_B/, /B_B/, /B_AE/, /B_AE/, /AE_AE/, /AE_AE/, /AE_AE/, /AE_AE/, /AE_AE/, /AE_TD/, /AE_TD/, /TD_TD/, /TD_TD/, /TD_TD/, /TD_bSIL/, /TD_bSIL/, ...

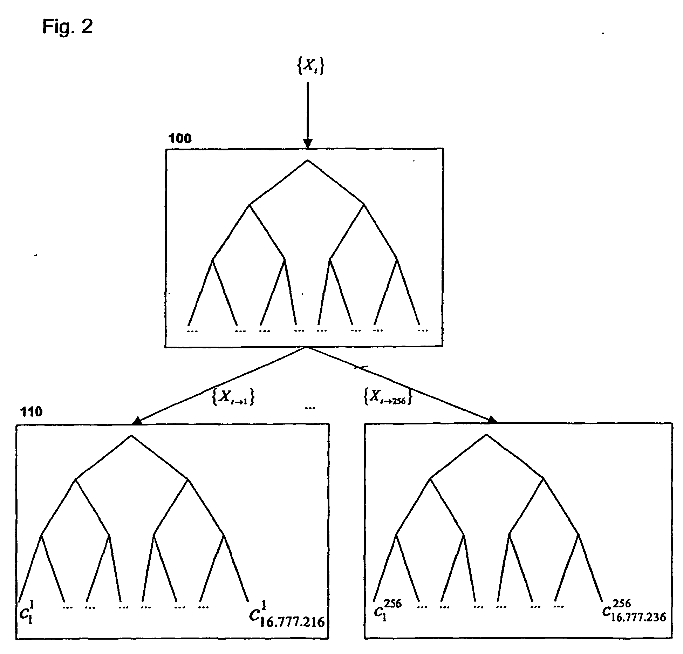

Figure 2 shows a functional diagram of step 30. The sequence of representative vectors $\{X_1\}$ passes firstly through an 8 step binary tree vectorial quantiser (100), which carries out a first classification of the acoustic signal. On exiting this quantiser representative vectors are obtained which are unchanged with respect to entrance, but classified into 256 different groups, i.e., a first partition of the space of $\{X_1\}$ into regions and a partition of the entrance sequence into $\{X_{t\rightarrow i}\}$ $1 \leq i \leq 256$ is performed. The vectorial quantiser of 100 is designed and trained in a conventional manner according to the original algorithm presented in (9), using the Euclidean distance in the 39-dimension space to calculate distortion.

To train the vectorial quantiser 100 and in general the whole system, 300 audio hours of different origins and with different speakers was prepared which was manually segmented and annotated to the level of phonemes. Since initial recognition is performed at the level of subphonic units, the decomposition of the phonemes into subphonic units for the training sequence was performed according to the following rules:

1. Supposing the phoneme sequence ..., $\varphi_{k-1}$, $\varphi_k$, $\varphi_{k+1}$, ... is taken, in which the phoneme $\varphi_k$ is produced in the time segment $\left[t_i^k, t_f^k\right]$ and $t$ is in units of 10 ms, in correspondence with the sequence of representative vectors $\{X_t\}$.

2. The representative vectors $\{X_t\}$ are assigned to subphonic units according to the rule:

$$
\begin{cases}
X_t \rightarrow /\varphi_{k-1}\_\varphi_k/ & ; t_i^k < t \leq t_i^k + 0,2(t_f^k - t_i^k) \\
X_t \rightarrow /\varphi_k\_\varphi_k/ & ; t_i^k + 0,2(t_f^k - t_i^k) < t \leq t_i^k + 0,8(t_f^k - t_i^k) \\
X_t \rightarrow /\varphi_k\_\varphi_{k+1}/ & ; t_i^k + 0,8(t_f^k - t_i^k) < t \leq t_f^k
\end{cases}
$$

Other examples of algorithms based in tree vectorial quantisers to calculate probability functions or for recognition tasks can be found in patents (10) and (11), although the algorithms and procedures are very different to those described in the present invention.

Once the $\{X_t\}$ space has been segmented, step 110 performs the classification of the representative vectors $\{X_{t\rightarrow i}\}$ into subphonic units. With the model adopted, on exiting 110 a subphonic sequence $\left\{\varphi'_{j,m}\right\}$ will have been obtained such that:

$$
\varphi_{j,m} = /\varphi_j\_\varphi_m/ \qquad 1 \leq j \leq 60; 1 \leq m \leq 60
$$

represents the recognised subphonic units.

Step 110 represents a 24 step residual vectorial quantiser. In general, $X^1$ is defined as a $k$-dimensional aleatory vector with probability distribution function $F_{X1}(\cdot)$. A $k$-dimensional vectorial quantiser (VQ) is described by the triplet (C, Q, P), in which C represents the dictionary of vectors, Q the association function and P the partition. If the quantiser has $N$ vectors, its functioning is such that, given a realisation $x^1$ of $X^1$, the quantised vector $Q(x^1)$ is the vector $c_i \in$ C;1 $\leq i \leq N$ such that the distance between $x^1$ and $c_i$ is the lesser for any $c_i \in$ C; $1 \leq i \leq N$. Which is to say, the vector c, is taken which is the best approximation to the entrance vector $x^1$ for a given distance function, generally the Euclidean distance. The partition P segments the space into $N$ regions, and the vectors C are the centroids of their respective regions. The problem of the calculation of the triplet (C,Q,P) so that the VQ with $N$ vectors is the best approximation to a given aleatory vector $X^1$ can be resolved generically with the algorithm LBG (12), which in essence is based on providing a sufficiently long training sequence representative of $X^1$ and successively optimising the position of the vectors C in the partitions P and subsequently the position of the partitions P with respect to the vectors C until achieving a minimum of distortion on the training sequence. The VQ of step 100 represents a particular case of binary tree organised VQ such that quantisation is less expensive in terms of the complexity of the calculation. In the present case, $X^1$ is considered the representative vector $X_i$ and to each vector $c_i \in$ C; $1 \leq i \leq N$ is associated a subphonic representation $\varphi_{j,m}$,

so that the VQ carries out a recognition of the entrance representative vectors $\{X_t\}$.

Naturally, it is desirable to have a VQ with the greatest N possible and with moderate calculation complexity to attain the best approximation to $\{X_t\}$. The problem is that a greater $N$ also increases the length of the training sequence necessary and the complexity of the training of the VQ and subsequently of the decoding and recognition. One solution is the use of residual vectorial quantisers (RVQ). An RVQ of $P$ steps is formed by an ensemble of $P$ VQ's, $\{(C^p, Q^p, P^p); 1 \leq p \leq P\}$ ordered so that for a realisation $x^1$ of $X^1$, the VQ $(C^1, Q^1, P^1)$ quantises the vector $x^1$ and the remaining steps $(C^{p+1}, Q^{p+1}, P^{p+1})$ quantise the residual vectors $x^{p+1} = x^p - Q(x^P)$ of the previous step $(C^p, Q^p, P^p)$, for $1 \leq p \leq P$. Each dictionary $C^p$ contains $N^p$ vectors. Both the vectors of $C^p$ and the cells of $P^p$ are indexed with the subindex $j^p$, where $j^p \in J^p = \{0,1,...,N^p\text{-}1\}$. The multistep index $j^p$ is the $P$-tuple formed by the concatenation of the individual indexes of each step $j^p$ and represents the course through all the RVQ. I.e., $\mathbf{j}^p = (j^1, j^2,..., j^p)$, and the quantised vector $\hat{x}^1$ is obtained as the sum of the vectors quantised in each step

$$\hat{x}^{\cdot 1} = \sum_{p=1}^{P} c_{j^p}^{P}$$

The advantage of the RVQ's is that each individual VQ will have $N^p$ vectors and a sufficiently long training sequence can be obtained, but the total RVQ will have

$$N = \prod_{p=1}^{P} N^P$$

vectors, a much greater number that couldn't be trained. Additionally, if each of the steps is a tree structured VQ, the complexity of the total decodification will be low.

However, the problem of the RVQ's is that the quality of the quantisation obtained with a total of N vectors is far inferior to that of a normal VQ or tree structured VQ of a single step with the same N vectors, the reason for which they have not been widely used. It has been shown in (13) that the loss of quality is due to the fact that each of the steps is optimised with the LBG algorithm separately from the rest, and the decodification is also carried out separately in each of the steps, thereby the accumulated effect of the decisions taken in the steps subsequent to a given step can cause the resulting quantised vector to be outside the partition cell selected in the first step. If in addition the VQ's in each of the steps have a tree structure, the result will be that many of the vector combinations of the different steps will be effectively inaccessible.

Step 110 has been designed from an algorithm proposed in (13) to construct RVQ's based in binary trees with symmetric reflection. Specifically, a 24 step binary tree with symmetric reflection RVQ is used. The ensemble of steps $\{(C^P, Q^P, P^P); 1 \leq p \leq P\}$ with $P = 24$ which form the RVQ is represented in figure 1 as element 40. Naturally, a design based in a different number of steps could be used without any restriction in scope.

At this time $2^{32}$ different vectors are being handled, each one associated to a phonetic subelement of which there will be $60^2$ different values. In addition, in reality it is known that many of the possible $\varphi_{j,m}$ combinations will not be produced. Thus, it is known that for each $\varphi_{j,m}$ combination obtained really a great number of possible vectors $C_{j^p}$ of the RVQ in 40 will correspond to said combination. To reduce the quantity of memory necessary and the complexity of the decodification, the following RVQ tree reduction algorithm is applied once it is already trained:

1. Initialise p = 24.
2. The branches of the RVQ, which are situated in step p , are taken, i.e., the vectors $C_{j^p}$ such that longitude $(j^p) = p$
3. If the vector $C_{j^{p\text{-}1}\_0}$ and the vector $C_{j^{p\text{-}1}\_1}$ are both associated to the same subphonic element $\varphi_{j,m}$, *step p* is discarded and the subphonic element $\varphi_{j,m}$ is associated with the vector $C_{j^{p\text{-}1}}$.
4. If $p > 2$, $p = p\text{-}1$ is taken and substep 2 is repeated.

In point 2, $j^p$ is the binary index of the vector within the binary vectorial quantiser, its longitude thus representing the level of the tree to which it has descended, i.e., which residual quantisation step it is at, the quantisers being multistep binary tree with symmetrical reflection quantisers.

With respect to point 3 it should be taken into account that since it is a binary tree, in each step there are two vectors, which are labelled with the subindexes _0 and _1. To define the quantised vector this distinction is not necessary, because the value of the corresponding bit in the index already marks which of the two has been chosen. At this point what is being looked at is whether the two vectors correspond to the same subphonic element, this step is no longer necessary because whatever its resolution the same classification will be arrived at.

This algorithm allows reduction by approximately $2^9$ of the number of associations to save, and in addition also reduces the number of comparisons to perform when decoding, without any loss in recognition precision.

Exiting step 110 there is then the sequence of recognised subphonic elements $\left\{\varphi'_{j,m}\right\}$. In step 50 the segmentation of the subphonic elements is carried out. Initially, the sequence of subphonic elements $\left\{\varphi'_{j,m}\right\}$ is segmented performing a detection of the subphonic elements which incorporate one of the auxiliary phonemes represented in the table given above. The original sequence will be segmented whenever two consecutive subphonic elements comprise one of the auxiliary phonemes. These segments will provide a first estimation of words, although the segmentation will not be overly precise and several groups of joined words will be obtained in the same segment. Subsequently the following algorithm is used to group the subphonic elements into phonemes:

1. Starting from the segmented sequence of subphonic elements:

$$\left\{\varphi'_{j,m}\right\} \qquad 1 \le t \le L$$

in which L is the segment length.

2. In

3. In
4. if
$$\begin{cases} \left\{j \in \varphi^i_{j,m}\right\} = \left\{j \in \varphi^{i+1}_{j,m}\right\}; & n_j = n_j + 1 \\ \left\{m \in \varphi^i_{j,m}\right\} = \left\{m \in \varphi^{i+1}_{j,m}\right\}; & n_- = n_- + 1 \end{cases}$$

5. If $\left\{j \in \varphi^i_{j,m}\right\} \ne \left\{j \in \varphi^{i+1}_{j,m}\right\}$ and $\left\{m \in \varphi^i_{j,m}\right\} \ne \left\{m \in \varphi^{i+1}_{j,m}\right\}$ the following grouping is performed:

$$\ell = \text{index max } \{n_j, n_m \ 1 \le j \le 60; \ 1 \le m \le 60\}$$

$$\left\{\varphi'_{j,m}\right\}; s \le t \le e \Rightarrow \varphi_f$$

$i=i+1$; If $i<L$-1 return to substep 3, otherwise finalise the segmentation.

6. $i = i + 1$; If $i < L$-1 return to substep 4, otherwise go to substep 5 and finalise the segmentation.

This algorithm groups the subphonic elements into phonemes, which are the elements which finally will be saved in the database. This allows reduction of the amount of information to be stored in the database by a factor in the order of 6 to 9, which facilitates subsequent processing.

References

Below are listed all of the bibliographical references cited in the above description. All the following bibliographical references (1), (2), (3), (4), (5), (6), (7), (8), (9), (10), (11), (12) and (13) have been included herein for reference purposes.

(1) Rabiner, L. and Juang, B.H., "Fundamentals of Speech Recognition", *Prentice-Hall,* Englewood Cliffs, N.J., 1993.

(2) Levinson, S.E., Rabiner, L.R. and Sondhi, M.M., "An Introduction to the Application of the Theory of Probabilistic Functions of a Markov Process to Automatic Speech Recognition", *The Bell System Technical Journal,* Vol. 62, No. 4, April 1983, pp. 1035-1074.

(3) Itakura, F., "Minimum Prediction Residual Principle Applied to Speech Recognition", *IEEE Transactions on Acoustics, Speech and Signal Processing,* Vol. ASSP-23, No. 1, Feb. 1975, pp. 66-72.

(4) Deng, Li and Ma, Jeff, "Spontaneous speech recognition using a statistical coarticulatory model for the vo-

# EP 1 505 572 B1

cal-tract-resonance dynamics", *Journal of the Acoustical Society of America,* Vol. 108, No. 5, Nov. 2000.

(5) Corinna, Ng., Wilkinson, Ross and Zobel, Justin, "Experiments in spoken document retrieval using phoneme n-grams", *Speech Communication,* Vol. 32, 2000, pp. 61-77.

(6) Renals, S., Abberley, D., Kirby, D. and Robinson, T., "Indexing and retrieval of broadcast news", *Speech Communication,* Vol. 32, 2000, pp. 5-20.

(7) Johnson, S.E.; Jourlin, P., Spärck Jones, K. and Woodland, P.C., "Spoken Document Retrieval for TREC-9 at Cambridge University", *Proceedings of the TREC-9 Conference,* to be published.

(8) Picone, J.W., "Signal Modeling Techniques in Speech Recognition", *Proceedings* of *the IEEE,* Vol. 81, No. 9, Sep. 1993, pp. 1215-1247.

(9) Gray, R.M., Abut, H., "Full search and tree searched vector quantisation of waveforms", *Proceedings of the IEEE ICASSP,* pp. 593-596, Paris, 1982.

(10) Watanabe, T., ''Pattern recognition with a tree structure used for reference pattern feature vectors or for HMM", *EP0627726,* Nippon Electric Co., 1994.

(11) Seide, F., "Method and system for pattern recognition based on tree organized probability densities", *US5857169,* Philips Corp., 1999.

(12) Linde, Y., Buzo, A., Gray, R.M., "An algorithm for vector quantiser design", *IEEE Transactions on Communications,* pp. 84-95, Jan.1980.

(13) Bames, C.F., Frost, R.L., "Residual vector quantisers with jointly optimized codebooks", *Advances in Electronics and Electron Physics, 1991*

## Claims

1. Voice recognition procedure which comprises:

   (a) a step of decomposing a digitised voice signal into a plurality of fractions,
   (b) a step of representation of each of the fractions by a representative vector $X_t$, and
   (c) a step of classification of said representative vectors $X_t$ in which each representative vector $X_t$ is associated with a phonetic representation, which allows a sequence of phonetic representations to be obtained

   **characterised in that** said classification step comprises at least one multistep binary tree residual vectorial quantisation.

2. Procedure according to claim 1, **characterised in that** said classification step comprises at least two successive vectorial quantisations.

3. Procedure according to claim 2, **characterised in that** said classification step comprises a first vectorial quantisation suitable for classifying each of said representative vectors $X_t$ in a group of among 256 possible groups, and a second vectorial quantisation suitable for classifying each of said representative vectors $X_t$ classified within each of said 256 groups in a subgroup of among at least 4096 possible subgroups, and preferably 16,777,216 possible subgroups, for each of said groups.

4. Procedure according to one of claims 2 or 3, **characterised in that** at least one of said vectorial quantisations is a multistep binary tree with symmetrical reflection residual vectorial quantisation.

5. Procedure according to at least one of claims 1 to 4, **characterised in that** said phonetic representation is a subphonic element.

6. Procedure according to at least one of claims 1 to 5, **characterised in that** said fractions are partially overlapped.

**7.** Procedure according to at least one of claims 1 to 6, **characterised in that** subsequent to said classification step there is a segmentation step which allows said phonetic representations to be joined to form groups of greater phonetic length.

**8.** Procedure according to claim 7, **characterised in that** said segmentation step comprises a group search of at least two subphonic elements which each comprise at least one auxiliary phoneme, and a grouping of the subphonic elements which are comprised between each pair of said groups which forms segments of subphonic elements.

**9.** Procedure according to one of claims 7 or 8, **characterised in that** said segmentation step comprises a step grouping subphonic elements into phonemes, in which said grouping step is performed on each of said segments of subphonic elements and comprises the following substeps:

1. Starting from the sequence of segments of subphonic elements:

$$\left\{ \varphi_{j,m}^{t} \right\} \qquad 1 \leq t \leq L$$

in which L is the segment length.

2. In

3. In $\left[ \left\{ j \in \varphi_{j,m}^{i} \right\} = \left\{ j \in \varphi_{j,m}^{i+1} \right\}; \qquad n_j = n_j + 1 \right.$

4. If $\left. \left\{ m \in \varphi_{i,m}^{i} \right\} = \left\{ m \in \varphi_{i,m}^{i+1} \right\}; \qquad n_m = n_m + 1 \right.$

5. If $\left\{ j \in \varphi_{j,m}^{i} \right\} \neq \left\{ j \in \varphi_{j,m}^{i+1} \right\}$ and $\left\{ m \in \varphi_{j,m}^{i} \right\} \neq \left\{ m \in \varphi_{j,m}^{i+1} \right\}$ the following grouping is performed:

$$f = \text{index max } \{ n_j, n_m \ 1 \leq j \leq 60; \ 1 \leq m \leq 60 \}$$

$$\left\{ \varphi_{j,m}^{t} \right\}; s \leq t \leq e \Rightarrow \varphi_f$$

$i = i + 1$; If $i<L$-1 return to substep 3, otherwise finalise the segmentation.
6. $i=i+1$; If $i<L$-1 return to substep 4, otherwise go to substep 5 and finalise the segmentation.

**10.** Procedure according to at least one of claims 1 to 9, **characterised in that** it comprises a learning step in which at least one known digitised voice signal is decomposed into a phoneme sequence and each phoneme is decomposed into a sequence of subphonic elements, and subsequently a subphonic element is assigned to each representative vector $X_t$ according to the following rules:

1. $\varphi_{k-1}$, $\varphi_k$, $\varphi_{k+1}$, ... being the phoneme sequence, in which the phoneme $\varphi_k$ is produced in the time segment $\left[ t_i^k, t_f^k \right]$, in correspondence with the sequence of representative vectors $\{X_t\}$.

2. The representative vectors $\{X_t\}$ are assigned to subphonic units according to the rule:

$$\begin{cases} X_t \rightarrow / \varphi_{k-1} \_ \varphi_k / & ; t_i^k < t \leq t_i^k + 0,2(t_f^k - t_i^k) \\ X_t \rightarrow / \varphi_k \_ \varphi_k / & ; t_i^k + 0,2(t_f^k - t_i^k) < t \leq t_i^k + 0,8(t_f^k - t_i^k) \\ X_t \rightarrow / \varphi_k \_ \varphi_{k+1} / & ; t_i^k + 0,8(t_f^k - t_i^k) < t \leq t_f^k \end{cases}$$

**11.** Procedure according to at least one of claims 1 to 10, **characterised in that** it comprises a step of reduction of the residual vectorial quantisation tree which comprises the following substeps:

1. An initial value is given to p = number of steps.

2. The branches of the residual vector quantisations which are situated in step $p$ are taken, i.e., the vectors $c_{jp}$ such that longitude $(j^p) = p$

3. If the vector $c_{jp\text{-}1\_0}$ and the vector $c_{jp\text{-}1\_1}$ are both associated to the same subphonic element $\varphi_{j,m}$, step p is discarded and the subphonic element $\varphi_{j,m}$ is associated with the vector $c_{jp\text{-}1}$.

4. If $p > 2$, $p = p\text{-}1$ is taken and substep 2 is repeated.

**12.** Procedure according to claim 11, **characterised in that** said step of reduction of the residual vectorial quantisation tree is performed subsequently to said learning step.

**13.** Procedure according to at least one of claims 1 to 12, **characterised in that** said representative vector is of 39 dimensions, which are 12 normalised Mel-cepstral coefficients, the energy in logarithmic scale, and its first and second order derivatives.

**14.** Information technology system which comprises an execution environment suitable for executing an information technology programme **characterised in that** it comprises voice recognition means with at least one multistep binary tree with residual vectorial quantisation adapted to carry out procedure according to at least one of claims 1 to 13.

**15.** Information technology programme when loaded directly into an internal memory of a computer **characterised in that** it comprises instructions adapted for performing a procedure according to at least one of claims 1 to 13 on said computer,

**16.** Information technology programme stored in a medium suitable to be used by a computer **characterised in that** it comprises computer executable instructions adapted for performing a procedure according to at least one of claims 1 to 13 when loaded into said computer.

**Revendications**

**1.** Procédé de reconnaissance vocale comprenant:

(a) une étape de décomposition d'un signal vocal numérisé en une pluralité de fractions,

(b) une étape de représentation de chacune des fractions par un vecteur représentatif $X_t$ et

(c) une étape de classification desdits vecteurs représentatifs $X_t$ dans laquelle chacun des vecteurs représentatifs $X_t$ est associé à une représentation phonétique, ce qui permet d'obtenir une séquence de représentations phonétiques

**caractérisé en ce que** ladite étape de classification comprend au moins une quantification vectorielle résiduelle d'arborescence binaire multi-étapes.

**2.** Procédé selon la revendication 1, **caractérisé en ce que** ladite étape de classification comprend au moins deux quantifications vectorielles successives.

**3.** Procédé selon la revendication 2, **caractérisé en ce que** ladite étape de classification comprend une première quantification vectorielle appropriée pour la classification de chaque vecteur représentatif $X_t$ dans un groupe parmi 256 groupes possibles, et une seconde quantification vectorielle appropriée pour la classification de chacun desdits vecteurs représentatifs $X_t$, classés dans chacun desdits 256 groupes, dans un sous-groupe parmi au moins 4 096 sous-groupes possibles, soit préférablement 16 777 216 sous-groupes possibles, pour chacun desdits groupes.

**4.** Procédé selon l'une des revendications 2 ou 3, **caractérisé en ce qu'**au moins une desdites quantifications vectorielles est une arborescence binaire multi-étapes avec quantification vectorielle résiduelle à réflexion symétrique.

**5.** Procédé selon au moins l'une des revendications 1 à 4, **caractérisé en ce que** ladite représentation phonétique est un élément sub-phonique.

**6.** Procédé selon au moins l'une des revendications 1 à 5, **caractérisé en ce que** lesdites fractions se chevauchent partiellement.

**7.** Procédé selon au moins l'une des revendications 1 à 6, **caractérisé en ce qu'**une étape de segmentation suit ladite étape de classification et permet de joindre lesdites représentations phonétiques pour former des groupes possédant une longueur phonétique plus importante.

**8.** Procédé selon la revendication 7, **caractérisé en ce que** ladite étape de segmentation comporte une recherche de groupe d'au moins deux éléments sub-phoniques, qui comprennent chacun au moins un phonème auxiliaire, et un groupement des éléments sub-phoniques compris entre chaque paire desdits groupes formant des segments d'éléments sub-phoniques.

**9.** Procédé selon l'une des revendications 7 ou 8, **caractérisé en ce que** ladite étape de segmentation comprend une étape de groupement d'éléments sub-phoniques en phonèmes, dans laquelle ladite étape de groupement est exécutée pour chacun desdits segments d'éléments sub-phoniques et comprend les sous-étapes suivantes :

1. démarrage à partir de la séquence de segments d'éléments sub-phoniques :

$$\left\{\varphi_{j,m}^{t}\right\} \qquad 1 \le t \le L$$

où L est la longueur du segment ;
2. initialisation avec $i=1$ ;
3. init
4. si
$$\begin{cases} \left\{j \in \varphi_{j,m}^{i}\right\} = \left\{j \in \varphi_{j,m}^{i+1}\right\} ; & n_j = n_j + 1 \\ \left\{m \in \varphi_{j,m}^{i}\right\} = \left\{m \in \varphi_{j,m}^{i+1}\right\} ; & n_m = n_m + 1 \end{cases}$$

5. si $\left\{j \in \varphi_{j,m}^{i}\right\} \ne \left\{j \in \varphi_{j,m}^{i+1}\right\}$ et $\left\{m \in \varphi_{j,m}^{i}\right\} \ne \left\{m \in \varphi_{j,m}^{i+1}\right\}$, le groupement suivant est effectué :

$$f = \text{index max } \left\{n_j, n_m 1 \le j \le 60; 1 \le m \le 60\right\}$$

$$\left\{\varphi_{j,m}^{i}\right\}, s \le t \le e \Rightarrow \varphi_f$$

$i=i+1$ ; si $i<L-1$ retour à la sous-étape 3, sinon finalisation de la segmentation ;
6. $i=i+1$ ; si $i<L-1$, retour à la sous-étape 4, sinon aller à la sous-étape 5 et finalisation de la segmentation.

**10.** Procédé selon au moins l'une des revendications 1 à 9, **caractérisé en ce qu'**il comprend une étape d'apprentissage dans laquelle au moins un signal vocal numérisé connu est décomposé en une séquence de phonèmes et chaque phonème est décomposé en une séquence d'éléments sub-phoniques, un élément sub-phonique étant ensuite assigné à chaque vecteur représentatif $X_t$ selon les règles suivantes .

1. $\varphi_{k-1}$, $\varphi_k$, $\varphi_{k+1}$ ... est la séquence de phonèmes, dans laquelle le phonème $\varphi_k$ est produit dans l'intervalle temporel $\left[t_i^k, t_f^k\right]$, en correspondance avec la séquence de vecteurs représentatifs $\{X_t\}$ ;

2. les vecteurs représentatifs $\{X_t\}$ sont assignés à des unités sub-phoniques selon la règle suivante :

$$\begin{cases} X_t \rightarrow \left|\varphi_{k-1} \_ \varphi_k\right| & ; \quad t_i^k < t \le t_i^k + 0,2\left(t_f^k - t_i^k\right) \\ X_t \rightarrow \left|\varphi_k \_ \varphi_k\right| & ; \quad t_i^k + 0,2\left(t_f^k - t_i^k\right) < t \le t_i^k + 0,8\left(t_f^k - t_i^k\right) \\ X_t \rightarrow \left|\varphi_k \_ \varphi_{k+1}\right| & ; \quad t_i^k + 0,8\left(t_f^k - t_i^k\right) < t \le t_f^k \end{cases}$$

**11.** Procédé selon au moins l'une des revendications 1 à 10, **caractérisé en ce qu'**il comprend une étape de réduction de l'arborescence de quantification vectorielle résiduelle comprenant les sous-étapes suivantes :

1. une valeur initiale est attribuée à p = nombre d'étapes ;
2. les branches des quantifications vectorielles résiduelles qui sont situées à l'étape p sont acquises, c'est-à-dire les vecteurs $C_{jp}$ tels que la longitude $(j^p) = p$ ;
3. si le vecteur $C_{jp-1\_0}$ et le vecteur $C_{jp-1\_1}$ sont tous deux associés au même élément sub-phonique $\varphi_{j-m}$, l'étape p est omise et l'élément sub-phonique $\varphi_{j-m}$ est associé au vecteur $C_{jp-1}$;
4. si $p>2$, $p=p-1$ est attribué et la sous-étape 2 est répétée.

**12.** Procédé selon la revendication 11, **caractérisé en ce que** ladite étape de réduction de l'arborescence de quantification vectorielle résiduelle est exécutée après ladite étape d'apprentissage.

**13.** Procédé selon au moins l'une des revendications 1 à 12, **caractérisé en ce que** ledit vecteur représentatif possède 39 dimensions, c'est-à-dire 12 coefficients cepstraux normalisés d'échelle Mel, l'énergie en échelle logarithmique et leurs dérivées de premier et de second ordre.

**14.** Système de technologie de l'information comprenant un environnement d'exécution approprié pour exécuter un programme de technologie de l'information, **caractérisé en ce qu'**il comprend un moyen de reconnaissance vocale avec au moins une quantification vectorielle résiduelle d'arborescence binaire multi-étapes appropriée pour exécuter un procédé selon au moins l'une des revendications 1 à 13.

**15.** Programme de technologie de l'information à charger directement dans une mémoire interne d'un ordinateur, **caractérisé en ce qu'**il comprend des instructions adaptées pour exécuter un procédé selon au moins l'une des revendications 1 à 13 sur ledit ordinateur.

**16.** Programme de technologie de l'information enregistré sur un support approprié pour être utilisé par un ordinateur, **caractérisé en ce qu'**il comprend des instructions exécutables par un ordinateur pour exécuter un procédé selon au moins l'une des revendications 1 à 13 lorsqu'il est chargé dans ledit ordinateur.

**Patentansprüche**

**1.** Spracherkennungsverfahren, das folgendes besitzt :

(a) einen Schritt der Zerlegung eines digitalisierten Sprachsignals in eine Vielzahl von Bruchteilen,
(b) einen Schritt der Darstellung eines jeden der Bruchteile durch einen repräsentativen Vektor $X_t$, und
(c) einen Schritt der Klassifizierung der repräsentativen Vektoren $X_t$, wobei jeder repräsentative Vektor $X_t$ mit einer phonetischen Darstellung verbunden ist, so das man eine Sequenz phonetischer Darstellungen erhalten kann,

**dadurch gekennzeichnet, dass** der Klassifizierungsschritt mindestens eine residuelle, vektorielle Quantisierung mit Mehrstufen-Binärbaum umfasst.

**2.** Verfahren nach Anspruch 1, **dadurch gekennzeichnet, dass** der Klassifizierungsschritt mindestens zwei aufeinanderfolgende, vektorielle Quantisierungen umfasst.

**3.** Verfahren nach Anspruch 2, **dadurch gekennzeichnet, dass** der Klassifizierungsschritt eine erste vektorielle Quantisierung umfasst, die für die Klassifizierung jedes der repräsentativen Vektoren $X_t$ in einer Gruppe unter 256 möglichen Gruppen geeignet ist, und eine zweite vektorielle Quantisierung umfasst, die geeignet ist für die Klassifizierung jedes der repräsentativen Vektoren $X_t$, die in jeder der 256 Gruppen klassifiziert sind, in einer Untergruppe unter mindestens 4096 möglichen Untergruppen, und vorteilhafterweise 16.777.216 möglichen Untergruppen, für jede der Gruppen.

**4.** Verfahren nach einer der Ansprüche 2 oder 3, **dadurch gekennzeichnet, dass** es sich bei mindestens einer der vektoriellen Quantisierungen um einen Mehrstufen-Binärbaum mit residueller, vektorieller Quantisierung mit symmetrischer Reflexion handelt.

**5.** Verfahren nach mindestens einem der Ansprüche 1 bis 4, **dadurch gekennzeichnet, dass** es sich bei der phonetischen Darstellung um ein subphonisches Element handelt.

**6.** Verfahren nach mindestens einem der Ansprüche 1 bis 5, **dadurch gekennzeichnet, dass** die Bruchteile teilweise überlappen.

**7.** Verfahren nach mindestens einem der Ansprüche 1 bis 6, **dadurch gekennzeichnet, dass** dem Klassifizierungsschritt ein Segmentierungsschritt folgt, so dass die phonetischen Darstellungen zu Gruppen mit einer größeren phonetischen Länge zusammengefügt werden können.

**8.** Verfahren nach Anspruch 7, **dadurch gekennzeichnet, dass** der Segmentierungsschritt eine Gruppendurchsuchung von mindestens zwei subphonischen Elementen umfasst, die jeweils mindestens ein Hilfsphonem besitzen, sowie eine Zusammenfassung oder Gruppierung der subphonischen Elemente, die sich zwischen jedem Gruppenpaar befinden, welche Segmente subphoner Elemente bilden.

**9.** Verfahren nach einem der Ansprüche 7 oder 8, **dadurch gekennzeichnet, dass** der Segmentierungsschritt einen Schritt umfasst, in dem die subphonen Elemente zu Phonemen zusammengefasst werden, wobei der Schritt der Zusammenfassung in Bezug auf jedes der Segmente subphoner Elemente durchgeführt wird, und die folgenden Unterschritte umfasst :

1. Beginnend mit der Sequenz von Segmenten subphoner Elemente :

$$\{ \varphi^t_{j.m} \} \qquad l \leq t \leq L$$

wobei L das Segment Länge ist.

2. i = L in $\{ \{ j \; \varepsilon \; \varphi^l_{j.m} \} = \{ j \; \varepsilon \; \varphi_{j.m}^{l+1} \} \; ; \qquad n_j = n_j + l$

3. s = i; e

4. Wenn $\{$

$$\{ \{m \; \varepsilon \; \varphi^i_{j.m} \} = \{ m \; \varepsilon \; \varphi_{j.m}^{i+1} \} \; ; \qquad n_m = n_m + l$$

5. Wenn $\{j \; \varepsilon \; \varphi^i_{j.m}\} \neq \{j \; \varepsilon \; \varphi_{j.m}^{i+1}\}$ und $\{m \; \varepsilon \; \varphi^i_{j.m}\} \neq \{m \; \varepsilon \; \varphi_{j.m}^{i+1}\}$, wird die folgende Zusammenfassung oder Gruppierung durchgeführt:

$$f = \text{Index}_{max} \{ n_j, n_m \; l \leq j \leq 60; \; l \leq m \leq 60 \}$$

$$\{ \varphi^t_{j.m} \} \; ; s \leq t \leq e \rightarrow \varphi_f$$

i = i + l ; wenn i < L - 1, zu Unterschritt 3 zurückkehren und die Segmentierung abschließen.

6. i = i + l; wenn i < L - 1, zu Unterschritt 4 zurückkehren, sonst zu Unterschritt 5 gehen und die Segmentierung abschließen.

**10.** Verfahren nach mindestens einem der Ansprüche 1 bis 9, **dadurch gekennzeichnet, dass** es einen Lernschritt umfasst, bei dem mindestens ein bekanntes, digitalisiertes Sprachsignal in eine Sequenz von Phonemen und jedes Phonem in eine Sequenz subphonischer Elemente zerlegt wird, und anschließend jedem repräsentativen Vektor $X_t$ nach den folgenden Regeln ein subphonisches Element zugeordnet wird:

1. $\varphi_{k-1}, \varphi_k, \varphi_{k+1}, ....$ ist die Phonemsequenz, in der das Phonem $\varphi_t$ in dem Zeitsegment $[t^k_i, t^k_f]$ in Übereinstimmung mit der Sequenz repräsentativer Vektoren $\{X_t\}$ erzeugt wird.

2. Die repräsentativen Vektoren $\{X_t\}$ werden subphonischen Einheiten nach der folgenden Regel zugeordnet:

$$\{ X_t \rightarrow / \varphi_{k-l} - \varphi_k / \quad ; t^k_i < t \le t^k_i + 0{,}2 \, (t^k_f - t^k_i)$$

$$\{ X_t \rightarrow / \varphi_k - \varphi_k / \quad ; t^k_i + 0{,}2 \, (t^k_f - t^k_i) < t \le t^k_i + 0{,}8 \, (t^k_f - t^k_i)$$

$$\{ X_t \rightarrow / \varphi_k - \varphi_{k+l} / \quad ; t^k_i + 0{,}8 \, (t^k_f - t^k_i) < t \le t^k_f$$

**11.** Verfahren nach mindestens einem der Ansprüche 1 bis 10, **dadurch gekennzeichnet, dass** es einen Schritt zur Reduzierung des residuellen, vektoriellen Quantisierungsbaumes besitzt, der die folgenden Unterschritte beinhaltet:

1. p = Anzahl der Schritte wird ein Anfangswert zugewiesen.
2. Die Verzweigungen der residuellen, vektoriellen Quantisierungen, die sich in Schritt p befinden, werden genommen, d.h. die Vektoren $c_j$, so dass die Länge ($j^p$) = p ist.
3. Wenn der Vektor $C_{jp-1\_0}$ und der Vektor $C_{jp-1\_1}$ beide mit dem gleichen subphonischen Element $\varphi_{j,m}$, verbunden sind, wird der Schritt p weggelassen, und das subphonische Element $\varphi_{j,m}$ wird mit dem Vektor $c_{j-1}$ verbunden.
4. Wenn p > 2, wird p = p - 1 genommen, und der Unterschritt 2 wird wiederholt.

**12.** Verfahren nach Anspruch 11, **dadurch gekennzeichnet, dass** dieser Schritt der Reduzierung des residuellen, vektoriellen Quantisierungsbaumes nach dem Lernschritt durchgeführt wird.

**13.** Verfahren nach mindestens einem der Ansprüche 1 bis 12, **dadurch gekennzeichnet, dass** der repräsentative Vektor 39 Abmessungen hat, was 12 standardisierten Mel-Cepstrum-Koeffizienten entspricht, und die Energie, sowie ihre Derivationen erster und zweiter Ordnung, einen logarithmischem Maßstab besitzt.

**14.** System der Informationstechnik, das eine Ausführungsumgebung besitzt, die für die Ausführung eines Programmes der Informationstechnik geeignet ist, **dadurch gekennzeichnet, dass** es Spracherkennungsfunktionen mit mindestens einer residuellen, vektoriellen Quantisierung mit Mehrstufen-Binärbaum besitzt, die ein Verfahren gemäß mindestens einem der Ansprüche 1 bis 13 durchführen kann.

**15.** Programm der Informationstechnik, das, wenn es direkt in den internen Speicher eines Computers geladen wird, **dadurch gekennzeichnet ist, dass** es Anweisungen zur Durchführung eines Verfahrens gemäß mindestens einem der Ansprüche 1 bis 13 für den Computer besitzt.

**16.** Programm der Informationstechnik, das auf einem Medium gespeichert ist, welches für die Verwendung mit einem Computer geeignet ist, **dadurch gekennzeichnet, dass** es vom Computer ausführbare Anweisungen für die Durchführung eines Verfahrens gemäß mindestens einem der Ansprüche 1 bis 13 besitzt, wenn es auf diesen Computer geladen wurde.

Fig. 1

Fig. 2

$\{X_t\}$

100

$\{X_{t\to1}\}$ ... $\{X_{t\to256}\}$

110

$c_1^1$ ... ... ... ... ... $c_{16.777.216}^1$

$c_1^{256}$ ... ... ... ... ... $c_{16.777.236}^{256}$